# FASCICULE DE BREVET EUROPEEN

(11) **EP 2 340 726 B1**
(45) Date de publication et mention de la délivrance du brevet: **22.08.2012**
(21) Numéro de dépôt: 10193862.9
(22) Date de dépôt: 06.12.2010
(51) Int. Cl.: A23L 3/36, F25D 3/00, F25D 13/00, F25D 23/00

(54) **Surgélateur de croûtage d'un produit alimentaire**
Gefrieranlage zur Krustenbildung einem Lebensmittelprodukt
Freezer system for crust formation of a food product

(30) Priorité: 16.12.2009 FR 0959049
(43) Date de publication de la demande: 06.07.2011
(73) Titulaire: CEMMI-Construction-Etude de Matériel-Maintenance Industrielle, 29170 Fouesnant (FR)
(72) Inventeur: Rolland, Joseph, 56110, GOURIN (FR)
(74) Mandataire: Roussel, Eric Marcel Henri

(56) Documents cités:
- WO-A1-96/32615
- WO-A1-2004/017000

## Description

L'invention concerne un surgélateur de croûtage d'un produit alimentaire.

L'invention peut s'appliquer à tout type de produit alimentaire, dont la consistance doit être solidifiée au moins en surface par l'application de froid.

Le produit alimentaire dont il faut assurer le croûtage peut avoir par exemple une consistance molle en petit morceaux agglomérés comme par exemple dans le cas de steaks hachés. Toutefois, le produit alimentaire peut également avoir une consistance molle monobloc, comme par exemple dans le cas de filets de poisson, comme par exemple des filets de saumon.

Le croûtage consiste essentiellement à transformer en une croûte une surface du produit alimentaire.

Pour effectuer ce croûtage, il est connu de faire passer le produit alimentaire dans une chambre ou tunnel de croûtage pour souffler de l'air froid dessus.

Le produit alimentaire dont on a effectué le croûtage peut ensuite être déplacé éventuellement dans un autre dispositif pour terminer les opérations de surgélation, notamment pour surgeler le produit alimentaire en profondeur, par exemple dans un dispositif à pile en hélices ascendantes.

Un convoyeur est prévu pour transporter le produit alimentaire dans le tunnel de croûtage.

Le document WO 96/32615 décrit un surgélateur de croûtage dans lequel de l'air froid est soufflé de bas en haut entre des rouleaux tournant sur eux-mêmes pour déplacer les produits alimentaires se trouvant dessus. Selon ce document, on obtient de cette manière la formation rapide d'une croûte gelée sur la surface inférieure des produits alimentaires transportés sur les rouleaux dans le tunnel et ainsi les produits alimentaires n'ont plus tendance à coller aux rouleaux. En revanche, durant le fonctionnement, du givre s'accumule sur les rouleaux, et ce givre doit être enlevé par des racleurs appliqués contre les rouleaux par le dessous.

Ce dispositif présente des inconvénients pour un fonctionnement continu sur une longue durée. En effet, le givre ou la glace qui s'accumule sous les rouleaux ou à proximité des racleurs finit par faire obstacle et par bloquer la rotation des rouleaux au bout de quelques heures.

Il faut alors qu'un utilisateur arrête la machine, ouvre le carter du dispositif de croûtage pour casser et enlever la glace sous les rouleaux, ce qui est fastidieux et génère une perte de temps et une perte de rendement de la ligne de surgélation.

Par ailleurs, d'autres surgélateurs de croûtage sont connus, dans lesquels les produits alimentaires sont transportés sur une bande sans fin dans une chambre soufflant de l'air froid pour assurer un croûtage des produits alimentaires se trouvant sur la bande, mais dans ce cas le produit alimentaire a tendance à coller à la bande du fait du gel, ce qui doit être évité pour empêcher les pertes de produits alimentaires, pour empêcher l'accumulation trop grande de ces particules alimentaires sur la bande sans fin, ainsi que pour des raisons d'hygiène.

L'invention vise à obtenir un surgélateur de croûtage palliant les inconvénients de l'état de la technique, pour empêcher dans une large mesure aussi bien l'accumulation de particules alimentaires que de glace sur le convoyeur et pour améliorer le fonctionnement en continu assurant le croûtage d'au moins une surface du produit alimentaire.

A cet effet, l'invention a pour objet un surgélateur de croûtage d'au moins un produit alimentaire, comportant :
- au moins un convoyeur comportant des rouleaux rotatifs, entre lesquels se trouve un espace, pour le déplacement du produit alimentaire,
- une chambre contenant des moyens de soufflage d'air froid à une température négative au moins de bas en haut dans l'espace entre les rouleaux pour assurer un croûtage du produit alimentaire se trouvant sur les rouleaux,
caractérisé en ce que le convoyeur comporte en outre un premier dispositif pour déplacer dans un sens d'avancée les rouleaux reliés entre eux en une boucle traversant la chambre, un deuxième dispositif pour faire tourner les rouleaux sur eux-mêmes dans un sens de rotation inverse de leur sens d'avancée dans la chambre, et des moyens de réglage de la vitesse d'avancée des rouleaux dans le sens d'avancée et de la vitesse de rotation des rouleaux dans le sens de rotation inverse du sens d'avancée, pour que les rouleaux sortent de la chambre au bout d'une durée prédéterminée après leur entrée dans cette chambre, inférieure à un temps de séjour prédéterminé du produit alimentaire sur les rouleaux dans la chambre, les rouleaux passant en dehors de la chambre dans un dispositif de mise à une température positive.

Suivant un mode de réalisation de l'invention, le temps de séjour du produit alimentaire sur les rouleaux dans la chambre est déterminé par la différence entre la vitesse d'avancée des rouleaux dans le sens d'avancée et la vitesse tangentielle non nulle imprimée au produit alimentaire par la vitesse de rotation des rouleaux dans le sens de rotation inverse du sens d'avancée des rouleaux.

Suivant un mode de réalisation de l'invention, les rouleaux sont métalliques au moins en partie.

Suivant un mode de réalisation de l'invention, les rouleaux ont leur surface extérieure de contact avec le produit alimentaire, qui est métallique.

Suivant un mode de réalisation de l'invention, les rouleaux sont entièrement métalliques.

Suivant un mode de réalisation de l'invention, le dispositif de mise en température comprend au moins un caisson de vapeur d'eau dans lequel passent les rouleaux en dehors de la chambre.

Suivant un mode de réalisation de l'invention, le dispositif de mise en température met les rouleaux à une température telle que les rouleaux ont à l'entrée dans la chambre une température supérieure à celle du produit alimentaire.

Suivant un mode de réalisation de l'invention, le premier dispositif comprend une première chaîne par rapport à laquelle les rouleaux sont supportés, la première chaîne étant entraînée par des moyens d'entraînement dans le sens d'avancée, le deuxième dispositif pour faire tourner les rouleaux comprend une deuxième chaîne engrenant avec un pignon fixé sur chaque rouleau, des deuxièmes moyens d'entraînement de la deuxième chaîne pour faire tourner par l'intermédiaire des pignons les rouleaux dans le sens de rotation inverse du sens d'avancée étant prévus.

Suivant un mode de réalisation de l'invention, la première chaîne comporte des maillons ayant des articulations entre eux, les articulations de la première chaîne étant distinctes et éloignées des rouleaux, une pluralité d'éléments étant prévue, chaque élément étant fixé à la première chaîne et chaque élément supportant à rotation plusieurs rouleaux.

Suivant un mode de réalisation de l'invention, les rouleaux passent dans un dispositif de lavage des rouleaux en aval de la chambre et en amont du dispositif de mise en température.

L'invention sera mieux comprise à la lecture de la description qui va suivre, donnée uniquement à titre d'exemple non limitatif en référence aux dessins annexés, sur lesquels :
- la figure 1 est une vue schématique en coupe verticale d'un mode de réalisation d'un surgélateur de croûtage selon l'invention,
- la figure 2 est une vue schématique en coupe verticale agrandie du convoyeur du surgélateur suivant la figure 1,
- la figure 3 est une vue schématique en coupe verticale agrandie d'une partie d'un dispositif d'entraînement du du surgélateur suivant la figure 1.

Aux figures, le surgélateur 1 de croûtage suivant l'invention comporte un convoyeur 2 du produit alimentaire comportant un ensemble de rouleaux 20 reliés entre eux en une boucle 3 sans fin. La boucle 3 de rouleaux 20 décrit une trajectoire prescrite comportant au moins une partie horizontale 31 sur laquelle doivent être posés un ou plusieurs produits alimentaires P.

Chaque produit alimentaire P est par exemple sous la forme d'amas ou de morceaux monoblocs comme par exemple un steak haché P représenté à la figure. Bien entendu, plusieurs de ces amas ou morceaux monoblocs P sont disposés les uns à la suite des autres sur les rouleaux 2 sur la partie 31.

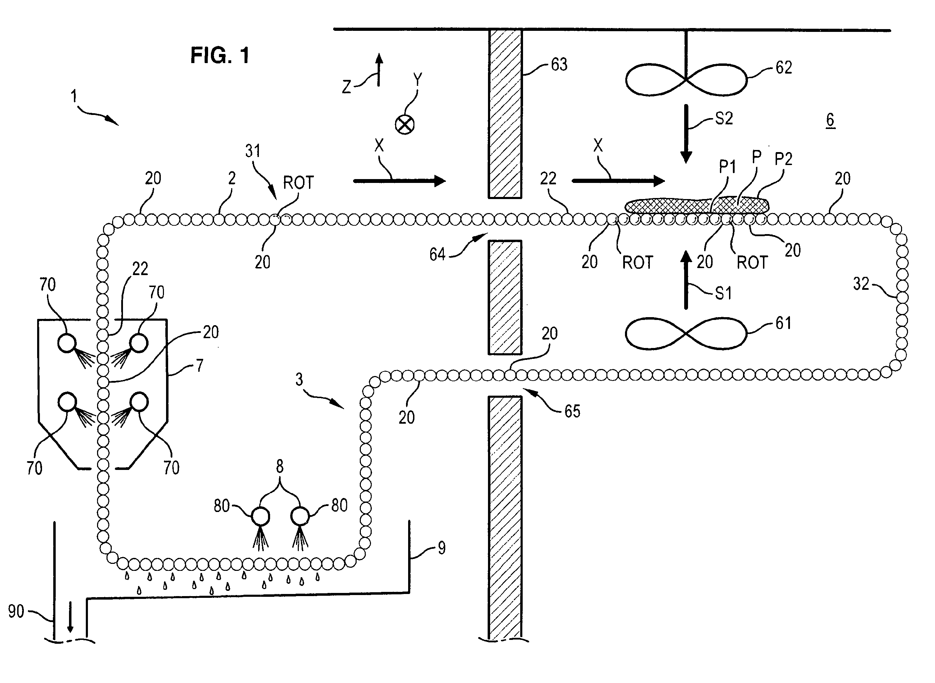

Dans le mode de réalisation représenté aux figures, chaque rouleau 2 est métallique, par exemple en étant en acier inoxydable et a par exemple une forme cylindrique circulaire s'étendant suivant une direction transversale horizontale Y, qui est celle perpendiculaire au plan de la figure 1.

Les rouleaux 32 sont parallèles à la direction horizontale Y en étant adjacents l'un à l'autre et en ayant entre eux un espace 21 s'étendant donc également suivant la direction horizontale Y entre chaque paire de rouleaux 20 adjacents. Un premier dispositif 4 est prévu pour déplacer l'ensemble des rouleaux 20 dans un sens d'avancée sur la trajectoire prescrite, cette trajectoire prescrite étant par exemple dans un plan perpendiculaire à la direction horizontale Y. Par conséquent, sur la partie horizontale 31, les rouleaux 20 sont déplacés par le dispositif 4 en translation suivant la direction horizontale X dans le sens d'avancée, cette direction horizontale X étant perpendiculaire à la direction horizontale Y et formant avec la direction verticale ascendante Z un repère orthonormé.

Suivant l'invention, dans la partie horizontale 31 de support du ou des produits alimentaires P sur les rouleaux 20, les rouleaux 20 sont déplacés dans leur ensemble suivant le sens X d'avancée, donc en translation dans le mode de réalisation représenté à la figure 1, et sont en même temps entraînés en rotation sur eux-mêmes dans le sens inverse du sens X d'avancée, c'est-à-dire en rotation autour d'une direction transversale au sens X d'avancée, à savoir dans le mode de réalisation représenté à la figure 1, en rotation autour de leur axe central parallèle à la direction transversale Y.

Les rouleaux 20 sont donc mis en rotation sur eux-mêmes dans le sens ROT de rotation allant à rebroussement du sens X d'avancée au-dessus des rouleaux 20, de telle sorte que la vitesse tangentielle imprimée par la rotation des rouleaux 20 aux produits alimentaires P soit en sens inverse de la vitesse d'avancée du produit alimentaire P imprimée par l'avancée de l'ensemble des rouleaux 20 suivant le sens X. Par conséquent, cette vitesse tangentielle imprimée par la rotation des rouleaux 20 suivant le sens ROT de rotation se soustrait à la vitesse d'avancée des rouleaux 20 suivant le sens X pour le produit alimentaire P.

Sur la trajectoire de la boucle 3 de rouleaux 20 est disposée une chambre ou tunnel 6 contenant des moyens 61, 62 de soufflage d'air froid à une température négative, par exemple de -27°C, vers les rouleaux 20. Ces moyens de soufflage sont par exemple formés par un ou plusieurs ventilateurs 61, 62 d'air froid. Par exemple, à la figure 1, les moyens de soufflage peuvent comporter un ou plusieurs ventilateurs 61 de soufflage d'air froid suivant une direction S1 ascendante sous les rouleaux 20 dans la partie 31 horizontale, pour que de l'air froid traverse l'espace 21 en remontant entre les rouleaux 20 adjacents pour rencontrer la surface inférieure P1 du produit alimentaire P posé sur les rouleaux 20. Cet air froid provoque alors une solidification de la surface inférieure P1 du produit alimentaire P pour assurer le croûtage de celui-ci.

En outre, un ou plusieurs deuxième ventilateurs 62 peuvent être prévus pour souffler de l'air froid suivant une direction descendante S2 vers les rouleaux 20 pour assurer un croûtage de la surface supérieure P2 du produit alimentaire P posé sur les rouleaux 20.

La chambre 6 est délimitée par une ou plusieurs parois et/ou autre moyens, dont une seule paroi 63 a été représentée à la figure 1. La paroi 63 de la chambre 6 comporte une entrée 64 de passage des rouleaux 20 du convoyeur 2 avec le ou les produits alimentaires P posés dessus dans la partie horizontale 31 de support.

La chambre 6 comporte également une sortie 65 pour le passage des rouleaux 20.

La sortie 65 se situe par exemple en dehors de la partie horizontale 31. Par conséquent, les rouleaux 20 entrent dans la chambre 6 en traversant l'entrée 64 suivant le sens X d'avancée puis décrivent une trajectoire descendante 32 après la partie 31 de support pour déverser les produits alimentaires P sur un autre moyen situé à proximité et pouvant être un autre convoyeur, et sortent ensuite de la chambre 6 par la sortie 65. Par exemple, dans ce cas, ainsi que représenté à la figure 1, l'entrée 64 et la sortie 65 peuvent être prévues dans la même paroi 63 de la chambre 6. Toutefois, cette entrée 64 et cette sortie 65 pourraient être prévues dans des parois différentes.

En dehors de la chambre 6, les rouleaux 20 passent dans un dispositif 7 de mise à une température positive. Les rouleaux 20 sont par exemple en tout ou en partie métallique, par exemple en acier inoxydable, en ayant leur surface extérieure 22, devant servir à la réception du ou des produits alimentaires P dans la partie 31, qui est métallique, par exemple en acier inoxydable. De cette manière, les rouleaux 20 ont une grande capacité calorifique pour emmagasiner rapidement de la chaleur dans le dispositif 7. Le dispositif 7 de mise en température met les rouleaux 20 à une température telle que les rouleaux 20 ont à l'entrée 64 dans la chambre 6 une température supérieure à celle du produit alimentaire. Par exemple, le dispositif 7 porte les rouleaux 20 à une température d'environ +50°C. Le convoyeur 2 est donc réchauffé avant l'entrée dans le tunnel 6 de croûtage à l'aide de vapeur d'eau. Sur la partie 31 de support des produits alimentaires, en aval du dispositif 7 de mise en température et en amont de la chambre 6 est prévu un dispositif non représenté pour déposer le ou les produits alimentaires P sur les rouleaux 20. Le produit alimentaire P déposé sur les rouleaux 20 est par exemple à une température comprise entre + 5°C et + 10°C et par exemple + 7°C, ce qui correspond à la température habituelle de traitement des produits alimentaires à une température positive basse. Le produit alimentaire, par exemple un steak, est déposé sur le convoyeur 2 dont les rouleaux 20 sont chauds, la température du convoyeur 2 étant supérieure à la température du produit alimentaire.

Le convoyeur 2 et le produit alimentaire P pénètrent ensuite dans la chambre 6. L'air soufflé dans la chambre 6 est à une température négative de croûtage, de par exemple - 27°C. Par conséquent, du fait de la chaleur emmagasinée par les rouleaux 20 au préalable dans le dispositif 7, la surface inférieure P1 du produit alimentaire P atteint la température du seuil de congélation à 0°C dans la chambre 6 avant les rouleaux 20 qui le supportent. Il s'ensuit un croûtage du produit alimentaire P sur sa surface inférieure P1 soutenue par les rouleaux 20. La rotation des rouleaux 20 sur eux-mêmes empêche la prise en glace des produits alimentaires P sur les rouleaux 20 dans la chambre 6. On évite également que les produits alimentaires P collent aux rouleaux 20 et collent entre eux pour obtenir des produits de type IQF (surgélation individuelle, en anglais : "Individual Quick Frozen"). Les deux phénomènes consistant en ce que le produit alimentaire P atteint la température du seuil de congélation à 0°C avant les rouleaux 20 et en ce que les points de contact entre le produit alimentaire P et les rouleaux 20 ne sont jamais statiques du fait de la rotation des rouleaux 20 évitent que le produit alimentaire adhère au convoyeur 2 de support.

Des moyens de réglage sont prévus pour régler la vitesse d'avancée des rouleaux dans le sens X et la vitesse de rotation des rouleaux 20 dans le sens ROT inverse pour que chaque rouleau 20 traverse la chambre 6 en une durée D1 inférieure au temps T2 de séjour du produit alimentaire P dans cette chambre 6.

Par conséquent, on raccourcit la durée pendant laquelle chaque rouleau 20 se trouve exposé aux moyens 61, 62 de soufflage d'air froid dans la chambre 6, pour laisser très peu de temps à du givre de se former sur la surface extérieure 22 des rouleaux 20. On évite donc l'accumulation de givre dans la chambre 6. Par conséquent, lorsqu'un rouleau 20 sort de la chambre 6 par la sortie 65, très peu de givre s'est formé sur celui-ci et donc pratiquement aucun givre ne gêne les mouvements du convoyeur 2. En aval de la sortie 65 et en amont du dispositif 7 de mise en température, les rouleaux 20 traversent un dispositif 8 de lavage portant par exemple une ou plusieurs rampes 80 de projection d'eau vers les rouleaux 20. Le dispositif 7 de mise en température est par exemple formé par un caisson de vapeur comportant une ou plusieurs rampes 70 de projection de vapeur vers les rouleaux 20. Un dispositif 9 de récupération de l'eau issue de la vapeur du dispositif 7 de mise en température et du dispositif 8 de lavage est prévu pour évacuer cette eau vers un conduit 90 de sortie, par exemple commun aux dispositifs 7 et 8.

Lorsque les rouleaux 20 quittent le dispositif 7 de mise en température, ils sont pratiquement secs du fait de la chaleur accumulée par ceux-ci.

En plus de moyens de réglage de la durée D1 de passage des rouleaux 20 dans la chambre 6, des moyens sont prévus pour régler la vitesse d'avancée des rouleaux 20 suivant le sens X ainsi que la vitesse de rotation des rouleaux 20 dans le sens inverse ROT, pour que le temps T2 de séjour du produit alimentaire P dans la chambre 6 corresponde à un temps prescrit pour le croûtage.

Le temps T2 de séjour du produit alimentaire 2 dans la chambre 6 de croûtage est contrôlé en jouant d'une part sur la vitesse d'avancement du convoyeur 2 suivant le sens X et d'autre part sur la vitesse de rotation des rouleaux 20 suivant le sens inverse ROT.

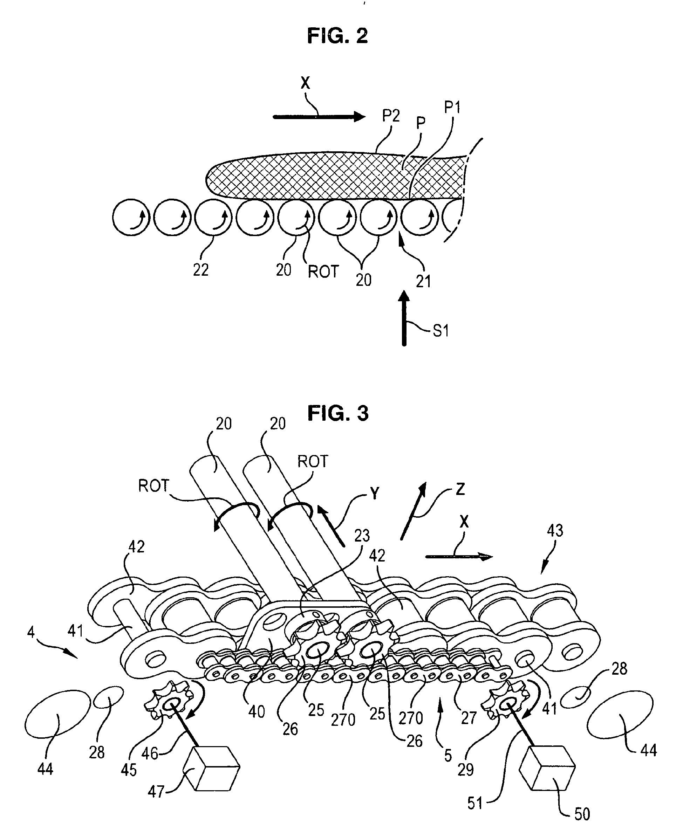

La figure 3 représente un mode de réalisation du dispositif 4 d'entraînement des rouleaux 20 suivant le sens X d'avancée et du dispositif 5 d'entraînement des rouleaux 20 suivant le sens ROT de rotation inverse du sens X d'avancée.

Le dispositif 4 d'entraînement des rouleaux 20 suivant le sens X d'avancée est distinct du dispositif 5 d'entraînement des rouleaux 20 suivant le sens ROT de rotation inverse du sens X d'avancée.

On décrit ci-dessous d'abord un mode de réalisation du dispositif 4 d'entraînement des rouleaux 20 suivant le sens X d'avancée.

Dans la boucle 3, les rouleaux 20 sont reliés entre eux par des éléments 40, ces éléments 40 étant prévus par exemple aux deux extrémités transversales des rouleaux 20. Ces éléments 40 sont par exemple formés par des plaques individuelles 40. Sur chaque élément 40 sont montés plusieurs rouleaux 20, par exemple deux rouleaux 20 ainsi que représenté, ou trois rouleaux 20. Ainsi, chaque élément 40 supporte plusieurs paliers 23 de support respectivement de plusieurs rouleaux 20 adjacents, ces paliers 23 étant fixés par tout moyen approprié 24 à l'élément 40 et chaque rouleau 20 étant rotatif sur lui-même par rapport à l'élément 40 autour de son axe central 25 parallèle à l'axe transversal Y.

Les éléments 40 sont mobiles entre eux pour pouvoir épouser les formes de la trajectoire de la boucle 3 et notamment les changements de direction.

Les éléments 40 sont par exemple fixés aux maillons 42 d'une première chaîne 43, les maillons 42 ayant des articulations 41 entre eux.

Dans le mode de réalisation représenté à la figure 3, les articulations 41 sont distinctes et éloignées sur l'élément 40 par rapport aux axes 25 de rotation des rouleaux 20.

Les maillons 42 de la chaîne 43 sont guidés par des roues 44 de guidage de la trajectoire de la boucle 3, ces roues 44 pouvant être par exemple des roues plates ou des roues dentées. Les maillons 42 de la chaîne 43 engrènent avec au moins une roue dentée 45 dont l'axe 46 est relié à un premier moteur 47 d'entraînement pour faire avancer les maillons 42 et donc les éléments 40 et rouleaux 20 dans le sens X d'avancée. Bien entendu le dispositif 4 d'entraînement peut comporter d'autres moyens intermédiaires comme par exemple des engrenages ou des courroies pour entraîner dans le sens X d'avancée les éléments 40 à partir d'un ou plusieurs moteur(s) 47.

On décrit ci-dessous un mode de réalisation du dispositif 5 d'entraînement des rouleaux 20 suivant le sens ROT de rotation inverse du sens X d'avancée.

L'axe 25 central des rouleaux 20 suivant la direction transversale Y est fixé à un pignon 26 engrenant avec les maillons 270 d'une deuxième chaîne 27 distincte de la première chaîne 43. La deuxième chaîne 27 est guidée par d'autres roues 28 de renvoi, dentées ou plates, suivant une trajectoire correspondant à celle de la boucle 3 et engrène par ses maillons 270 avec une autre roue dentée 29 reliée par un axe 51 à un autre moteur 50 d'entraînement pour déplacer la deuxième chaîne 26 également dans le sens X d'avancée entraînant la rotation des rouleaux 20 dans le sens inverse ROT. La deuxième chaîne 27 est distincte de la première chaîne 43.

A la figure 3, la disposition des roues 28, 29, 44 et 45 est donnée à titre symbolique, la disposition réelle des roues 28, 29, 44 et 45 étant prévue en correspondance de la trajectoire prescrite pour la boucle 3 de rouleaux formant le convoyeur 2.

Par conséquent, tous les rouleaux 20 sont entraînés en rotation suivant le sens ROT de rotation inverse du sens X d'avancée sur toute la trajectoire de la boucle 3, dans la chambre 6 et en dehors de la chambre 6.

La vitesse de rotation des deux axes 46, 51 des moteurs 47, 50 permet de régler la vitesse d'avancée des rouleaux 20 dans le sens X et la vitesse de rotation des rouleaux 20 dans le sens inverse ROT, chacun des moteurs étant pourvu de tels moyens de réglage, ces moteurs étant par exemple électriques.

Les rouleaux 20 tournent par exemple sur eux-mêmes tout le long de leur trajectoire de la boucle 3.

Après que les produits alimentaires P ont été croûtés et déversés depuis le convoyeur 2 dans un autre convoyeur non représenté, la surgélation des produits alimentaires P se poursuit dans un tunnel de surgélation classique.

## Revendications

1. Surgélateur de croûtage d'au moins un produit alimentaire, comportant :
- au moins un convoyeur (2) comportant des rouleaux (20) rotatifs, entre lesquels se trouve un espace (21), pour le déplacement du produit alimentaire,
- une chambre (6) contenant des moyens (61, 62) de soufflage d'air froid à une température négative au moins de bas en haut dans l'espace (21) entre les rouleaux (20) pour assurer un croûtage du produit alimentaire se trouvant sur les rouleaux (P),
**caractérisé en ce que** le convoyeur (2) comporte en outre un premier dispositif (4) pour déplacer dans un sens (X) d'avancée les rouleaux (20) reliés entre eux en une boucle (3) traversant la chambre (6), un deuxième dispositif (5) pour faire tourner les rouleaux (20) sur eux-mêmes dans un sens (ROT) de rotation inverse de leur sens (X) d'avancée dans la chambre (6), et des moyens de réglage de la vitesse d'avancée des rouleaux (20) dans le sens (X) d'avancée et de la vitesse de rotation des rouleaux (20) dans le sens (ROT) de rotation inverse du sens (X) d'avancée, pour que les rouleaux (20) sortent de la chambre (6) au bout d'une durée prédéterminée (D1) après leur entrée dans cette chambre (6), inférieure à un temps (T2) de séjour prédéterminé du produit alimentaire sur les rouleaux (20) dans la chambre (6), les rouleaux (20) passant en dehors de la chambre (6) dans un dispositif (7) de mise à une température positive.

2. Surgélateur suivant la revendication 1, **caractérisé en ce que** le temps (T2) de séjour du produit alimentaire sur les rouleaux (20) dans la chambre (6) est déterminé par la différence entre la vitesse d'avancée des rouleaux (20) dans le sens (X) d'avancée et la vitesse tangentielle non nulle imprimée au produit alimentaire par la vitesse (ROT) de rotation des rouleaux (20) dans le sens (ROT) de rotation inverse du sens (X) d'avancée des rouleaux (20).

3. Surgélateur selon l'une quelconque des revendications précédentes, **caractérisé en ce que** les rouleaux (20) sont métalliques au moins en partie.

4. Surgélateur selon l'une quelconque des revendications précédentes, **caractérisé en ce que** les rouleaux (20) ont leur surface extérieure (22) de contact avec le produit alimentaire, qui est métallique.

5. Surgélateur selon l'une quelconque des revendications précédentes, **caractérisé en ce que** les rouleaux (20) sont entièrement métalliques.

6. Surgélateur selon l'une quelconque des revendications précédentes **caractérisé en ce que** le dispositif (7) de mise en température comprend au moins un caisson (70) de vapeur d'eau dans lequel passent les rouleaux (20) en dehors de la chambre (6).

7. Surgélateur selon l'une quelconque des revendications précédentes **caractérisé en ce que** le dispositif (7) de mise en température met les rouleaux (20) à une température telle que les rouleaux (20) ont à l'entrée (64) dans la chambre (6) une température supérieure à celle du produit alimentaire.

8. Surgélateur selon l'une quelconque des revendications précédentes, **caractérisé en ce que**
- le premier dispositif (4) comprend une première chaîne (43) par rapport à laquelle les rouleaux (20) sont supportés, la première chaîne (43) étant entraînée par des moyens (45) d'entraînement dans le sens (X) d'avancée,
- le deuxième dispositif (5) pour faire tourner les rouleaux (20) comprend une deuxième chaîne (27) engrenant avec un pignon (26) fixé sur chaque rouleau (20), des deuxièmes moyens (50) d'entraînement de la deuxième chaîne (27) pour faire tourner par l'intermédiaire des pignons (26) les rouleaux (20) dans le sens (ROT) de rotation inverse du sens (X) d'avancée étant prévus.

9. Surgélateur suivant la revendication 8, **caractérisé en ce que** la première chaîne (43) comporte des maillons (42) ayant des articulations (41) entre eux, les articulations (41) de la première chaîne (43) étant distinctes et éloignées de des rouleaux (20), une pluralité d'éléments (40) étant prévue, chaque élément (40) étant fixé à la première chaîne (43) et chaque élément (40) supportant à rotation plusieurs rouleaux (20).

10. Surgélateur suivant l'une quelconque des revendications précédentes, **caractérisé en ce que** les rouleaux (20) passent dans un dispositif (8) de lavage des rouleaux (20) en aval de la chambre (6) et en amont du dispositif (7) de mise en température.

## Claims

1. A deep-freezer for crusting at least one food product, including:
- at least one conveyor (2) including rotary rollers (20), among which a space (21) is found, for displacing the food product,
- a chamber (6) containing means (61, 62) for blowing cold air at a negative temperature at least from bottom to top in the space (21) between the rollers (20) in order to ensure crusting of the food product found on the rollers (P), **characterized in that** the conveyor (2) further includes a first device (4) for displacing in an advance direction (X) the rollers (20) connected together in a loop (3) crossing the chamber (6), a second device (5) for rotating the rollers (20) on themselves in a direction (ROT) of rotation opposed to their advance direction (X) in the chamber (6), and means for adjusting the advance speed of the rollers (20) in the advance direction (X) and the speed of rotation of the rollers (20) in the direction (ROT) of rotation opposed to their advance direction (X), so that the rollers (20) exit the chamber (6) after a predetermined duration (D1), after having entered this chamber (6), of less than a predetermined dwelling time (T2) of the food product on the rollers (20) in the chamber (6), the rollers (20) passing outside the chamber (6) in a device (7) for setting a positive temperature.

2. The deep-freezer according to claim 1, **characterized in that** the dwelling time (T2) of the food product on the rollers (20) in the chamber (6) is determined by the difference between the advance speed of the rollers (20) in the advance direction (X) and the non-zero tangential speed imparted to the food product by the speed (ROT) of rotation of the rollers (20) in the direction (ROT) of rotation opposed to the advance direction (X) of the rollers (20).

3. The deep-freezer according to any of the preceding claims, **characterized in that** the rollers (20) are at least partly in metal.

4. The deep-freezer according to any of the preceding claims, **characterized in that** the rollers (20) have their outer surface (22) in contact with the food product, which is metal.

5. The deep-freezer according to any of the preceding claims, **characterized in that** the rollers (20) are entirely metal.

6. The deep-freezer according to any of the preceding claims, **characterized in that** the temperature setting device (7) comprises at least one steam box (70), into which the rollers (20) pass outside the chamber (6).

7. The deep-freezer according to any of the preceding claims, **characterized in that** the temperature setting device (7) sets the rollers (20) to a temperature such that the rollers (20) have at the entrance (64) in the chamber (6) a temperature above that of the food product.

8. The deep-freezer according to any of the preceding claims, **characterized in that**
- the first device (4) comprises a first chain (43) relatively to which the rollers (20) are supported, the first chain (43) being driven by driving means (45) in the advance direction (X),
- the second device (5) for rotating the rollers (20) comprises a second chain (27) meshing with a pinion (26) attached on each roller (20), second means (50) for driving the second chain (27) so as to rotate via the pinions (26) the rollers (20) in the direction (ROT) of rotation opposed to the advance direction (X), being provided.

9. The deep-freezer according to claim 8, **characterized in that** the first chain (43) includes links (42) having joints (41) between them, the links (41) of the first chain (43) being distinct and away from the rollers (20), a plurality of elements (40) being provided, each element (40) being attached to the first chain (43) and each element (40) rotatably supporting several rollers (20).

10. The deep-freezer according to any of the preceding claims, **characterized in that** the rollers (20) pass into a device (8) for washing the rollers (20) downstream from the chamber (6) and upstream from the temperature setting device (7).

## Patentansprüche

1. Gefrieranlage zur Krustenbildung wenigstens eines Lebensmittelprodukts, enthaltend:
- wenigstens eine Fördereinrichtung (2), welche rotierende Walzen (20), zwischen denen ein Zwischenraum (21) vorliegt, für die Verschiebung des Lebensmittelprodukts aufweist,
- eine Kammer (6), welche Mittel (61, 62) zum Blasen von Kaltluft bei einer negativen Temperatur wenigstens von unten nach oben in den Zwischenraum (21) zwischen den Walzen (20) enthält, um eine Krustenbildung bei dem Lebensmittelprodukt (P), welches sich auf den Walzen befindet, zu gewährleisten,
**dadurch gekennzeichnet, dass** die Fördereinrichtung (2) außerdem eine erste Vorrichtung (4) zur Verlagerung der Walzen (20), die miteinander in einem Ring (3) verbunden sind, der die Kammer (6) durchläuft, in einer Vorschubrichtung (X), eine zweite Vorrichtung (5) zum Drehen der Walzen (20) um sich selbst in einer Rotationsrichtung (ROT), die ihrer Vorschubrichtung (X) in der Kammer (6) entgegengesetzt ist, und Mittel zur Steuerung der Vorschubgeschwindigkeit der Walzen (20) in Vorschubrichtung (X) und der Rotationsgeschwindigkeit der Walzen (20) in Rotationsrichtung (ROT), entgegengesetzt der Vorschubrichtung (X), aufweist, so dass die Walzen (20) nach Ablauf einer vorbestimmten Zeitdauer (D1) nach ihrem Eintritt in die Kammer (6), die kürzer ist als eine vorbestimmte Verweilzeit (T2) des Lebensmittelprodukts auf den Walzen (20) in der Kammer (6), die Kammer (6) verlassen, wobei die Walzen (20) außerhalb der Kammer (6) eine Vorrichtung (7) zur Einstellung einer positiven Temperatur durchlaufen.

2. Gefrieranlage gemäß Anspruch 1, **dadurch gekennzeichnet, dass** die Verweilzeit (T2) des Lebensmittelprodukts auf den Walzen (20) in der Kammer (6) durch die Differenz zwischen der Vorschubgeschwindigkeit der Walzen (20) in Vorschubrichtung (X) und der Tangentialgeschwindigkeit (nicht Null), welche dem Lebensmittelprodukt durch die Rotationsgeschwindigkeit (ROT) der Walzen (20) in Rotationsrichtung (ROT), entgegengesetzt der Vorschubrichtung (X) der Walzen (20), verliehen wird, bestimmt wird.

3. Gefrieranlage gemäß irgendeinem der vorhergehenden Ansprüche, **dadurch gekennzeichnet, dass** die Walzen (20), zumindest zum Teil, metallisch sind.

4. Gefrieranlage gemäß irgendeinem der vorhergehenden Ansprüche, **dadurch gekennzeichnet, dass** die Oberfläche (22) der Walzen (20), die in Kontakt mit dem Lebensmittelprodukt steht, metallisch ist.

5. Gefrieranlage gemäß irgendeinem der vorhergehenden Ansprüche, **dadurch gekennzeichnet, dass** die Walzen (20) vollständig metallisch sind.

6. Gefrieranlage gemäß irgendeinem der vorhergehenden Ansprüche, **dadurch gekennzeichnet, dass** die Temperatureinstellvorrichtung (7) wenigstens einen Wasserdampfbehälter (70) umfasst, den die Walzen (20) außerhalb der Kammer (6) durchlaufen.

7. Gefrieranlage gemäß irgendeinem der vorhergehenden Ansprüche, **dadurch gekennzeichnet, dass** die Temperatureinstellvorrichtung (7) die Walzen (20) auf eine Temperatur bringt, so dass die Walzen (20) am Eingang (64) der Kammer (6) eine Temperatur aufweisen, die höher ist als die des Lebensmittelprodukts.

8. Gefrieranlage gemäß irgendeinem der vorhergehenden Ansprüche, **dadurch gekennzeichnet, dass**
- die erste Vorrichtung (4) eine erste Kette (43) umfasst, durch welche die Walzen (20) getragen werden, wobei die erste Kette (43) durch Antriebsmittel (45) in Vorschubrichtung (X) angetrieben wird,
- die zweite Vorrichtung (5) zum Drehen der Walzen (20) eine zweite Kette (27) umfasst, in die ein Ritzel (26), welches auf jeder Walze (20) befestigt ist, eingreift, wobei zweite Antriebsmittel (50) der zweiten Kette (27) zum Drehen der Walzen (20) in Rotationsrichtung (ROT), entgegen der Vorschubrichtung (X), durch Vermittlung der Ritzel (26) vorgesehen sind.

9. Gefrieranlage gemäß Anspruch 8, **dadurch gekennzeichnet, dass** die erste Kette (43) Kettenglieder (42) aufweist, zwischen denen Gelenke (41) vorliegen, wobei die Gelenke (41) der ersten Kette (43) getrennt und von den Walzen (20) entfernt sind, wobei eine Mehrzahl an Elementen (40) vorgesehen ist, wobei jedes Element (40) an der ersten Kette (43) befestigt ist, und jedes Element (40) die Rotation mehrerer Walzen (20) unterstützt.

10. Gefrieranlage gemäß irgendeinem der vorhergehenden Ansprüche, **dadurch gekennzeichnet, dass** die Walzen (20) eine Vorrichtung (8) zum Reinigen der Walzen (20) unterhalb der Kammer (6) und oberhalb der Temperatureinstellvorrichtung (7) durchlaufen.
